# EUROPÄISCHE PATENTSCHRIFT

(11) **EP 1 734 732 B1**
(45) Veröffentlichungstag und Bekanntmachung des Hinweises auf die Patenterteilung: **21.03.2012**
(21) Anmeldenummer: 06012036.7
(22) Anmeldetag: 12.06.2006
(51) Int. Cl.: H04M 15/00, H04L 12/14

(54) **Verfahren zur Vergebührung von Datenverkehr in einem Funk-Kommunikationssystem, Netzübergang-Netzknoten, Vergebührungsserver und Vergebührungssystem**
Method for billing data traffic in a radio-communication system as well as network gateway, billing server and billing system
Procédé pour la facturation de traffic à données dans un système de communication radio et passerelle de réseau, et serveur et système de facturation

(30) Priorität: 13.06.2005 DE 102005027242
(43) Veröffentlichungstag der Anmeldung: 20.12.2006
(73) Patentinhaber: Vodafone Holding GmbH, 40213 Düsseldorf (DE)
(72) Erfinder: Purkop, Thomas, 40489 Düsseldorf (DE); Hillier, Michael, 64347 Griesheim (DE)
(74) Vertreter: Cullinane, Marietta Bettina

(56) Entgegenhaltungen:
- EP-A1- 1 357 720
- "Digital cellular telecommunications system (Phase 2+); TS 32.225 V5.8.0 (2005-03)" ETSI STANDARDS, EUROPEAN TELECOMMUNICATIONS STANDARDS INSTITUTE, SOPHIA-ANTIPO, FR, Bd. 3-SA5, Nr. V580, März 2005 (2005-03), XP014028027 ISSN: 0000-0001
- "Universal Mobile Telecommunications System (UMTS) TS 32.299 V6.2.0 (2005-03) DIAMETER Charging application" ETSI STANDARDS, EUROPEAN TELECOMMUNICATIONS STANDARDS INSTITUTE, SOPHIA-ANTIPO, FR, Bd. 3-SA5, Nr. V620, März 2005 (2005-03), XP014028042 ISSN: 0000-0001
- CALHOUN AIRESPACE P ET AL: "Diameter Base Protocol, IETF RFC 3588" IETF STANDARD, INTERNET ENGINEERING TASK FORCE, IETF, CH, September 2003 (2003-09), XP015009370 ISSN: 0000-0003

## Beschreibung

Die vorliegende Erfindung betrifft ein Verfahren zur Vergebührung von Datenverkehr in einem Funk-Kommunikationssystem, einen Netzübergang-Netzknoten, einen Vergebührungsserver und ein System zur Vergebührung von Datenverkehr in einem Funk-Kommunikationssystem.

Bei modernen Funk-Kommunikationssystemen kann ein mobiles Endgerät über ein Zugangsnetzwerk mit einem Kernnetzwerk verbunden werden. Hierbei kann das Zugangsnetz insbesondere ein GPRS (General Packet Radio Service) oder ein UMTS-Netz sein. In dem Kernnetzwerk kann ein Dienstenetzwerk (zum Beispiel ein IP-Mulitmedia-Subsystem (IMS)) integriert sein. Der Übergang von dem Zugangsnetzwerk zu dem Kernnetzwerk erfolgt beispielsweise über einen so genannten Serving GPRS Support Node (SGSN), der Bestandteil des Kernnetzes ist. Hinter dem SGSN dient ein Netzübergang-Netzknoten, der beispielsweise ein Gateway GPRS Support Node (GGSN) ist, als Übergang vom Kernnetzwerk zum Dienstenetzwerk. Die Vergebührung in solchen IP-Multimedia-Subsystemen ist beispielsweise in dem Standard "Digital cellular telecommunications system (Phase 2+); TS 32.225 V5.8.0 (2005-03)" ETSI Standards, European Telecomimunications Standards Institute, Sophia-Antipo, FR, Bd. 3-SA5, Nr. V580, März 2005 (2005-03), XP014028027 ISSN:0000-0001 beschrieben, Hierbei wird von einer Vergebühungsfunktion (ECF) die an einem Anwendungsserver (AS) anfallenden Gebühren abgerechnet. Weiterhin werden in den Standards ETSI TS 132 299 V 6.2.0 und in 3GPP TS 32.200 weitere Vergebührungsmanagements beschrieben.

Um den über den Netzübergang-Netzknoten geleiteten Datenverkehr abrechnen zu können, ist der Netzübergang-Netzknoten mit einem Vergebührungsserver verbunden. Dieser ist in der Regel dazu ausgelegt die für einen bestimmten Datenverkehr anfallenden Gebühren zu berechnen. In diesem Vergebührungsserver wird somit die Gebührenverwaltung durchgeführt. Um dies zuverlässig ausführen zu können ist eine ständige Übermittlung von Informationen, das heißt Signalisieren, von dem Netzübergang-Netzknoten an den Vergebührungsserver notwendig. Da das kontinuierliche Signalisieren zwingend erforderlich ist, wird die

Abrechnungsgeschwindigkeit verringert und zudem können Abrechnungsmodi, die ein zusätzliches Signalisierungsaufkommen verursachen würden, nicht realisiert werden.

Aufgabe der vorliegenden Erfindung ist es somit eine Lösung zu schaffen, mit der mit möglichst geringem Signalisierungsaufwand zwischen dem Netzübergang-Netzknoten und dem Vergebührungsserver ein möglichst einfaches und flexibles Abrechnen von Datenverkehr in einem Funk-Kommunikationssystem ermöglicht wird.

Der Erfindung liegt die Erkenntnis zugrunde, dass für die Berechnung der zu erhebenden Gebühr statt einer Zeitspanne der Verwendung in einer Kommunikationsverbindung oder eines Volumens des Datenverkehrs, ein Berechnungszeitraum zugrunde gelegt wird.

Gemäß einem ersten Aspekt betrifft die Erfindung ein Verfahren zur Vergebührung von Datenverkehr in einem Funk-Kommunikationssystem gemäß Anspruch 1

Das mobile Endgerät wird im Folgenden auch als User Equipment (UE) bezeichnet und kann beispielsweise ein Handy, ein Laptop oder ein PC sein. Das Dienstenetz des Kommunikationssystems kann insbesondere ein IP-Multimedia Subsystem eines UMTS-Netzwerkes darstellen. Schließlich wird die Kommunikationsverbindung, die über den Netzübergang-Netzknoten geleitet wird, im Folgenden auch als PDP-Context bezeichnet, wobei PDP das so genannte Packet Data Protokoll bezeichnet.

Als Verwendung wird im Sinne dieser Erfindung die Verwendung eines bestehenden PDP-Contexts, das heißt insbesondere das Übermitteln von Datenverkehr über den PDP-Context verstanden. Datenverkehr, der in dem PDP-Context auftreten kann, ist beispielsweise Datenverkehr nach dem Internet Protokoll (IP-traffic).

Das Bestimmen des Berechnungszeitraums durch eine Verwendung kann insbesondere das Initiieren eines Berechnungszeitraums sein, wobei die Verwendung zu Beginn des Berechnungszeitraums auftreten kann oder aber auch in dem Verlauf des Berechnungszeitraums liegen kann. Durch das Ermitteln eines Vergebührungszeitraums durch Berechnungszeiträume, kann die Abrechnung von Datenverkehr in einer bestehenden Kommunikationsverbindung flexibler gestaltet werden. So kann die Vergebührung beispielsweise aktionsbezogen erfolgen. Eine zeitbasierte Vergebührung, bei der nach Sekunden oder Minutentakten der tatsächlichen Verwendung abgerechnet wird, ist hierzu nicht erforderlich. Somit kann auch die ständige Überwachung des Fortdauerns von Datenverkehr, Speicherung der Zeitdauer der Verwendung und das Aufsummieren der so ermittelten jeweiligen Benutzungsdauern sowie ein ständiges Übermitteln von Informationen betreffend den Datenverkehr zwischen dem Vergebührungsserver und dem Netzübergang-Netzknoten entfallen. Von einem Berechnungszeitraum kann eine Vielzahl von Verwendungen, durch die jeweils Datenverkehr hervorgerufen wird, umfasst sein.

Die Verwaltung des mindestens einen Berechnungszeitraums wird im Folgenden auch als Quotenmanagement bezeichnet und erfolgt in dem Netzübergang-Netzknoten. Indern die Verwaltung in dem Netzübergang-Netzknoten selber erfolgt, kann das benötigte Signalisierungsaufkommen, das zwischen dem Netzübergang-Netzknoten und einem Vergebührungsserver erforderlich ist, auf ein Minimum reduziert werden. Dies bedeutet eine Beschleunigung und Vereinfachung der erforderlichen Abrechnungsdauer.

Zu diesem Zweck ist der Netzübergang-Netzknoten vorzugsweise über eine Schnittstelle mit einem Vergebührungsserver verbunden und empfängt von dem Vergebührungsserver mindestens eine Eingangsgröße für die Verwaltung von Berechnungszeiträumen.

Der Vergebührungsserver kann insbesondere ein Server zur Authentifizierung, Autorisierung und Abrechnung der im Folgenden auch als AAA-Server (Authentication, Authorisation, Accounting) bezeichnet wird, sein. Die Schnittstelle kann nach dem so genannten Diameter-Protokoll, dem Nachfolger des Radius-Protokolls (Remote Authentication Dial In User Service), ausgelegt sein und wird im Folgenden auch als DCCA-Schnittstelle (Diameter Credit Control Application) bezeichnet. Die Eingangsgröße kann in einem Parameter dieses Protokolls, zum Beispiel einem Attribut-Wert-Paar AVP, integriert sein. Somit kann die Eingangsgröße in bekannte Signale zwischen dem Vergebührungsserver und dem Netzübergang-Netzknoten integriert werden.

Die Eingangsgröße wird vorzugsweise in Abhängigkeit der Art des Datenverkehrs festgelegt. Diese Festlegung, das heißt die Zuordnung einer Eingangsgröße zu einem bestimmten Datenverkehr kann in dem Vergebührungsserver erfolgen. Die Eingangsgrößen können in dem Vergebührungsserver tabellarisch nach den Kategorien von Datenverkehr hinterlegt sein. Mit der Eingangsgröße können dem Netzübergang-Netzknoten sämtliche für die Verwaltung der Berechnungszeiträume erforderlichen Informationen zur Verfügung gestellt werden. Ab dem Empfang der mindestens einen Eingangsgröße kann der Netzübergang-Netzknoten somit ohne das Erfordernis eines Signalisierens oder der Speicherung nutzerspezifischer Daten die Berechnungszeiträume unter Berücksichtigung eines Nutzerprofils und/oder der Art des Datenverkehrs verwalten. Die Auslegung des Netzübergang-Netzknotens ist daher weiterhin einfach gehalten und der Signalisierungsaufwand mit dem Vergebührungsserver ist gering.

Vorzugsweise wird über die Schnittstelle mindestens ein Ergebnis der Verwaltung der Berechnungszeiträume von dem Netzübergang-Netzknoten an den Vergebührungsserver übermittelt. Mit nur einem Signal kann somit dem Vergebührungsserver die für die Abrechnung notwendige Information zur Verfügung gestellt werden. Dieses Ergebnis kann beispielsweise die Länge des Vergebührungszeitraumes, der dem Nutzer in Rechnung gestellt werden muss sein.

Die mindestens eine Eingangsgröße für die Verwaltung von Berechnungszeiträumen kann bei der Herstellung der Kommunikationsverbindung übermittelt werden. Hierdurch wird gewährleistet, dass die für die Verwaltung notwendige Eingangsgröße in jedem Fall beim Auftreten einer ersten Verwendung und dem dadurch verursachten ersten Datenverkehrs in der Kommunikationsverbindung zur Verfügung steht und ein zeitnahes Verwalten realisiert werden kann. Zudem kann durch diese Maßnahme der Signalisierungsbedarf weiter verringert werden, da eine gesonderte Anfrage nach beziehungsweise Einholen der Eingangsgröße durch den Netzübergang-Netzknoten zumindest bei der ersten Verwendung in der Kommunikationsverbindung nicht notwendig ist.

Die mindestens eine Eingangsgröße für die Verwaltung von Berechnungszeiträumen kann eine Anzahl von Abrechnungstoken darstellen. Durch die Verwendung von Abrechnungstoken kann die Signalmenge, die zur Vergebührung notwendig ist, minimiert werden. Darüber hinaus wird durch die Verwendung von Abrechnungstoken die Flexibilität des Verfahrens gesteigert, da diese für unterschiedliche Abrechnungsmodi verwendet werden können. Mittels der Abrechnungstoken kann dem Netzübergang-Netzknoten auf einfache Weise eine Intelligenz verliehen werden, die ein Überwachen des Datenverkehrs und der Vergebührungszeiträume vereinfacht, ohne, dass nutzerspezifische und kategoriespezifische Informationen in dem Netzübergang-Netzknoten hinterlegt sein müssen. In dem Netzübergang-Netzknoten ist eine Logik hinterlegt oder kann als weitere Eingangsgröße an von dem Vergebührungsserver empfangen werden, die angibt, wie die Abrechnungstoken aufzubrauchen beziehungsweise zu nutzen sind. Vorzugsweise wird in dem Netzübergang-Netzknoten jedem Abrechnungstoken ein Berechnungszeitraum zugeordnet, das heißt für jeden Berechnungszeitraum ein Token verwendet. Die Verwaltung der Benutzungszeiträume umfass bei der Verwendung von Abrechnungstoken somit auch die Nutzung der Abrechnungstoken.

Die Eingangsgröße, die von dem Vergebührungsserver an den Netzübergang-Netzknoten übermittelt wird, kann vorzugsweise eine Angabe über die Länge des Berechnungszeitraums umfassen. Als Länge wird in diesem Zusammenhang die zeitliche Dauer des Berechnungszeitraums bezeichnet. Die Länge der Berechnungszeiträume wird unter Berücksichtigung des zu verwendenden Abrechnungsmodus und der Tatsache, ob Token verwendet werden, festgelegt. Werden keine Token verwendet, so wird die Länge der Berechnungszeiträume vorzugsweise größer gewählt als bei der Verwendung von Token. Im ersten Fall kann die Länge der Berechnungszeiträume beispielsweise jeweils 600 Sekunden und im zweiten Fall beispielsweise 30 bis 60 Sekunden betragen.

Zusätzlich kann die Eingangsgröße eine Angabe über den zu verwendenden Abrechnungsmodus umfassen. Die unterschiedlichen Abrechnungsmodi können sich insbesondere dadurch unterscheiden, wie der mindestens eine Berechnungszeitraum durch die Verwendung in dem PDP-Context bestimmt wird. Weiterhin kann beispielsweise durch den Abrechnungsmodus festgelegt werden, ob sich nach der Beendigung eines Berechnungszeitraums ein weiterer Berechnungszeitraum anschließt. Bei der Verwendung von Token kann mit dem Abrechnungsmodus auch die Art der Nutzung der Token festgelegt sein.

Vorzugsweise umfasst die Eingangsgröße hierbei auch einen Token-Schwellwert, das heißt ein Schwellwert für die Anzahl von Abrechnungstoken, die auf dem GGSN vorliegen müssen. Dieser Tokenschwellwert kann in dem Netzübergang-Netzknoten zur Auslösung bestimmter Aktionen verwendet werden. So kann mit dem Tokenschwellwert der Zeitpunkt festgelegt werden, zu dem der Netzübergang-Netzknoten an den Vergebührungsserver Informationen, insbesondere Ergebnisse der Verwaltung der Berechnungszeiträume, weiterleitet. Zusätzlich kann mit dem Tokenschwellwert festgelegt werden, wann eine Anfrage für weitere Eingangsgrößen, insbesondere das Anfordern weiterer Abrechnungstoken, von dem Netzübergang-Netzknoten an den Vergebührungsserver übermittelt wird. Die Überwachung des Erreichens des Token-Schellwertes stellt einen Teil des Quotenmanagements beziehungsweise der Verwaltung der Berechnungszeiträume dar und wird im Folgenden auch als allgemeines Quotenmanagement bezeichnet.

Das Ergebnis der Verwaltung von Berechnungszeiträumen, das übermittelt wird, stellt vorzugsweise das Erreichen des Token-Schwellwertes dar. Alternativ ist es aber auch möglich als Ergebnis der Verwaltung die Gesamtdauer, die sich aus den Berechnungszeiträumen ergibt, zu verwenden. In diesem Fall kann die Abrechnung ohne die Verwendung von Abrechnungstoken erfolgen. Beim Empfang des Ergebnisses kann an dem Vergebührungsserver ein Eintrag in die Rechnung für den Nutzer vorgenommen werden. Hierzu kann neben dem Signalisieren des Erreichens des Token-Schwellwertes auch der Zeitpunkt des Beginns und des Endes des Vergebührungszeitraums, der sich aus einem oder mehreren Berechnungszeiträumen zusammensetzt, übermittelt werden.

In dem Netzübergang-Netzknoten wird vorzugsweise beim Beginn jedes Berechnungszeitraums in dem Netzübergang-Netzknoten die Anzahl der Token um Eins verringert. Somit ist eine genaue Überwachung der tatsächlichen Verwendung in der Kommunikationsverbindung nicht notwendig und die Verwaltung in dem Netzübergang-Netzknoten wird vereinfacht. Es ist aber erfindungsgemäß auch möglich die Anzahl der Token erst beim Auftreten eines Datenverkehrs, das heißt einer Verwendung, während eines laufenden Berechnungszeitraums um Eins herabzusetzen.

Vorzugsweise wird der Datenverkehr, der in einer aufgebauten Kommunikationsverbindung über den Netzübergang-Netzknoten geleitet wird, beim Passieren des Netzübergang-Netzknotens kategorisiert. Auf diese Weise kann jeder Art von Datenverkehr der geeignete Abrechnungsmodus, insbesondere eine Abrechnung nach Zeit oder nach Volumen, zugeordnet werden. Der Kategorie kann der zu vergebührende Tarif zugeordnet sein. Die Kategorisierung erfolgt vorzugsweise in dem Netzübergang-Netzknoten und in dem Vergebührungsserver sind für die entsprechenden Kategorien Vergebührungsregeln hinterlegt.

Der Berechnungszeitraum kann in Abhängigkeit eines Abrechnungsmodus den gesamten Vergebührungszeitraum oder einen Teil des Vergebührungszeitraums darstellen. Im ersten Fall entspricht der Abrechnungsmodus somit der Funktionsweise einer Parkuhr, bei der ab dem Beginn eines Vergebührungszeitraums, der in diesem Fall dem Berechnungszeitraum entspricht, der Vergebührungszeitraum unabhängig von während des Verlaufs des Vergebührungszeitraums auftretenden oder ausbleibenden Verwendungen durchgehend läuft. Aufgrund dieser Funktionsweise wird dieser Abrechnungsmodus im Folgenden auch als Park-Meter (PM)-Modus bezeichnet.

Bei diesem Abrechnungsmodus startet der Berechnungszeitraum erst bei der ersten Verwendung der Kategorie in einem PDP-Context. Nach dem Ablauf des Berechnungszeitraums beginnt ein folgender Berechnungszeitraum erst bei der nächsten Verwendung. Während des Berechnungszeitraums kann der Verkehr passieren und es werden keine zusätzlichen Gebühren für diesen erhoben. Datenverkehr, der im Randbereich, insbesondere am Ende des Berechnungszeitraums auftritt, kann das Beginnen eines neuen Berechnungszeitraums hervorrufen. Jeder Berechnungszeitraum kann auf der Rechnung für den Nutzer separat identifizierbar angezeigt werden. Der Berechnungszeitraum wird unterbrochen, wenn der PDP-Context beendet wird. Der Rest eines begonnenen Berechnungszeitraums ist dann nicht wieder verwendbar. Der Dienst der erfindungsgemäßen Vergebührung wird nicht unterbrochen, selbst, wenn beispielsweise die Dienstegüte (Quality of Service QoS) sich ändert. Auch eine Änderung der Nutzerposition führt nicht zu einer Unterbrechung des Dienstes.

Im dem Fall, bei dem der Berechnungszeitraum in der Regel nur einen Teil des Vergebührungszeitraums darstellt, können insbesondere kurzzeitige Verwendungen genauer abgerechnet werden. Bei dieser Ausführungsform wird aus aufeinander folgenden Berechnungszeiträumen ein Vergebührungszeitraum definiert. Dieser Abrechnungsmodus wird daher im Folgenden auch als kontinuierliche Zeitdauer-Modus (Continuous Time Periode-Modus, CTP-Modus) bezeichnet. Auf die Berechnungszeiträume dieses Modus wird im Folgenden auch als Intervall oder CTP-Intervall Bezug genommen.

Die erste Zeit-Periode beginnt hierbei erst mit der ersten Verwendung für die Kategorie in einem PDP-Context. Aufeinanderfolgende Intervalle von x Sekunden werden berechnet, wenn Verkehr zu einem beliebigen Zeitpunkt in jedem der Intervalle auftritt. Solche konsekutive Intervalle werden zusammengeführt und bilden eine einzige kontinuierliche Zeit-Periode. Das erste Intervall von x Sekunden, das keinen Nutzerverkehr enthält, führt zum Beenden der kontinuierlichen Zeit-Periode. Die nächste CTP beginnt erst bei der nächsten Nutzung. Verkehr, der im Randbereich, insbesondere am Ende des Intervalls auftritt, kann nicht Teil des Intervalls angesehen werden, sondern dem nächsten Intervall zugerechnet werden. Jede CTP kann hierbei auf der Rechnung für den Nutzer separat identifizierbar angezeigt werden. Ein Intervall und damit die CTP wird unterbrochen, wenn der PDP-Context beendet wird und der Rest der verfügbaren Zeit des Intervalls kann in einem anschließenden PDP-Context nicht erneut verwendet werden. Auch bei diesem Abrechnungsmodus wird der Dienst der erfindungsgemäßen Vergebührung nicht unterbrochen, selbst, wenn beispielsweise die Dienstegüte (Quality of Service QoS) sich ändert. Auch eine Änderung der Nutzerposition führt nicht zu einer Unterbrechung des Dienstes.

Insbesondere bei dem CTP-Modus ist die Verwendung von Tokens vorteilhaft. Hierdurch können die Berechnungszeiträume kurz ausgelegt sein und dennoch ein häufiges Signalisieren zwischen dem Netzübergang-Netzknoten und dem Vergebührungsserver vermieden werden. Der Berechnungszeitraum kann bei dieser Ausführungsform beispielsweise im Bereich von 30 bis 60 Sekunden liegen. Ein Signalisieren an den Vergebührungsserver hingegen ist erst nach Erreichen des Schwellwertes für die Abrechnungstoken notwendig.

Die Verwendung, die den Berechnungszeitraum bestimmt, stellt vorzugsweise eine vorbestimmte Verwendung einer Nutzungs-Kategorie dar. Es ist somit nicht notwendig sämtliche Verwendungen zu überwachen. Die vorbestimmte Verwendung kann durch das Vorhandensein von zeitlich zuvor aufgetretenen Verwendungen in der Kommunikationsverbindung und/oder durch den zeitlichen Abstand zu zeitlich zuvor aufgetretenen Verwendungen definiert sein. Durch die Unterscheidung von Verwendungen unterschiedlicher Nutzungskategorien können jeder Kategorie die geeigneten Bedingungen zugeordnet werden. Während einige Nutzungskategorien nach dem Volumen des Datenstroms vergebührt werden, kann anderen eine Vergebührung gemäß der Erfindung nach der Zeit auferlegt werden. Auch bei der Vergebührung nach der Zeit können erneut unterschiedlichen Kategorien verwendet werden und diesen jeweils unterschiedliche Abrechnungsmodi oder Berechnungszeiträume zugeordnet werden.

Die vorbestimmte Verwendung einer Nutzungs-Kategorie, die den Berechnungszeitraum bestimmt, stellt beispielsweise die erste Verwendung in der bestehenden Kommunikationsverbindung dar. Durch diese erste Verwendung kann der erste Berechnungszeitraum ausgelöst werden. Das Auftreten der ersten Verwendung in einer bestehenden Kommunikationsverbindung ist leicht zu identifizieren und der Verwaltungsaufwand in dem Netzübergang-Netzknoten daher verhältnismäßig gering.

Die vorbestimmte Verwendung einer Nutzungs-Kategorie, die den Berechnungszeitraum bestimmt, kann aber auch eine weitere Verwendung in der Kommunikationsverbindung darstellen, wobei der Beginn dieser Verwendung nicht in einem laufenden Vergebührungszeitraum liegt. Hierdurch können in einer bestehenden Kommunikationsverbindung mehrere Vergebührungszeiträume nacheinander jeweils durch Auslösen eines Berechnungszeitraumes initiiert werden.

Es ist aber auch möglich während der Dauer eines Vergebührungszeitraums einen Berechnungszeitraum auszulösen, der nicht durch die erste Verwendung in der Kommunikationsverbindung bestimmt ist. Dies kann insbesondere der Falls ein, wenn ein Abrechnungsmodus verwendet wird, bei dem mehrere Berechnungszeiträume einen Vergebührungszeitraum bilden.

Der Vergebührungszeitraum wird vorzugsweise erst nach Ablauf einer Umschlagdauer als beendet erkannt, wobei die Umschlagdauer um einen Berechnungszeitraum länger als der Vergebührungszeitraum ist. Die Umschlagsdauer, die auch als Beobachtungsintervall bezeichnet werden kann, gewährleistet, dass die Verwendung in dem Vergebührungszeitraum tatsächlich beendet ist. Insbesondere bei einem Abrechnungsmodus, bei dem mehrere Berechnungszeiträume einen Vergebührungszeitraum bilden (CTP-Modus), ist diese verlängerte Umschlagsdauer von Vorteil. Durch eine Umschlagdauer kann hierbei gewährleistet werden, dass zuverlässig entschieden werden kann, ob in dem letzen Berechnungszeitraum eine Verwendung aufgetreten ist und dieser Berechnungszeitraum somit einen Teil des Vergebührungszeitraums darstellt, oder ob der kontinuierliche Vergebührungszeitraum unterbrochen ist. In dem PM-Model entspricht jeder Berechnungszeitraum der Umschlagdauer.

Der Vergebührungszeitraum kann als beendet erkannt werden, wenn für eine Verwendung kein Datenverkehr stattfindet. Diese Ausführungsform ist insbesondere für den CTP-Modus von Bedeutung.

Der Vergebührungszeitraum kann erfindungsgemäß aber auch bei Ausbleiben von Verwendungen weiterlaufen. Weder bei dem Abrechnungsmodus nach dem Parkuhr-System (PM) noch nach dem kontinuierlichen Abrechnungsmodus (CTP) bestehend aus mehreren Berechnungszeiträumen, wird der Berechnungszeitraum und damit der Vergebührungszeitraum abgebrochen, wenn zu einer Nutzungskategorie keine Verwendung in der Kommunikationsverbindung stattfindet, sofern der vorgegebene Berechnungszeitraum nicht abgelaufen ist. Es wird, wie bereits erläutert, vielmehr auf das Ende des Berechnungszeitraums oder gegebenenfalls der Umschlagdauer abgestellt.

Der Netzübergang-Netzknoten kann vor der Weiterleitung des Datenverkehrs für jede Kategorie eine Quote erfragen. Diese Quote kann für die jeweilige Nutzungskategorie eine Anzahl von Token und die Art der Abbuchung sowie die Länge der zu verwendenden Berechnungszeiträume umfassen. Es ist zusätzlich auch möglich die Quote nutzerspezifisch auszulegen, wobei gegebenenfalls ein von dem Nutzer bevorzugter Abrechnungsmodus berücksichtigt wird.

Die Kategorie der Verwendung und damit die zu erhebende Gebühr kann in Abhängigkeit der Herkunft und/oder des Ziels der Anwendung durch die der Datenverkehr erzeugt wird, festgelegt werden. Es ist somit möglich beispielsweise Datenverkehr, der durch Anwendungen hervorgerufen wird, die von dem Netzbetreiber bezogen wurden, mit einer anderen Gebühr, als Datenverkehr von Anwendungen, die von einem anderen Netzwerkbetreiber bezogen wurden, zu beaufschlagen. Anwendungen können beispielsweise Programme, wie Spiele, sein.

Weiterhin ist es auch möglich die Kategorie nach dem Empfänger des Datenverkehrs festzulegen. Hierdurch kann beispielsweise Datenverkehr zwischen Nutzern, die Kunden desselben Netzwerkbetreibers sind, einer anderen Kategorie zugeordnet werden, als Datenverkehr, der an einen Nutzer, der Kunde eines anderen Netzwerkbetreibers ist, gerichtet ist.

Gemäß einem weiteren Aspekt betrifft die Erfindung einen Netzübergang-Netzknoten eines Funk-Kommunikationssystems, der sich dadurch auszeichnet, dass dieser eine Einheit zum Empfang von Vergebührungsinformationen von einem Vergebührungsserver des Funk-Kommunikationssystems und eine Verwaltungseinheit zur Verwaltung von Berechnungszeiträumen für die Vergebührung einer Verwendung in einer in dem Funk-Kommunikationssystem bestehenden Verbindung (PDP-Context) aufweist. Statt der herkömmlichen Ausstattung, bei der der Netzübergang-Netzknoten sämtliche Informationen zur Verwaltung der Vergebührung von Datenverkehr an den Vergebührungsserver übermittelt, wird bei dem erfindungsgemäßen Netzübergang-Netzknoten die erforderliche Information empfangen und so die Möglichkeit eröffnet in dem Netzübergang-Netzknoten die Verwaltung der für die Vergebührung relevanten Zeiträume durchführen zu können.

Der Netzübergang-Netzknoten kann eine Einheit zum Interpretieren der empfangenen Vergebührungsinformationen aufweisen. Die Vergebührungsinformationen stellen vorzugsweise die Eingangsgrößen zur Verwaltung des mindestens einen Berechnungszeitraum dar. In dieser Interpretationseinheit kann beispielsweise die Verwendung übersandter Abrechnungstoken, das heißt der anzuwendende Abrechnungsmodus, identifiziert werden und die entsprechenden Schritte in dem Netzübergang-Netzknoten initiiert werden.

Der Netzübergäng-Netzknoten weist eine Verwaltungseinheit zur Verwaltung von Berechnungszeiträumen für die Vergebührung einer Verwendung in einer in dem Funk-Kommunikationssystem bestehenden Kommunikationsverbindung auf. In dieser Verwaltungseinheit, die das Quotenmanagement darstellt, kann insbesondere ein Timer vorgesehen sein, der gestartet wird, sobald ein Berechnungszeitraum beginnt. Der Timer wird auch als Quota-Consumption-Timer bezeichnet, da durch diesen die Nutzung der angegebenen Quote verwaltet werden kann. Weiterhin kann in der Verwaltungseinheit das Aufbrauchen der zur Verfügung stehenden Tokens verwaltet werden. Schließlich kann die Verwaltungseinheit bei Erreichen eines Schwellwertes für die zur Verfügung stehenden Token eine Anfrage an den Vergebührungsserver senden, in dem die Übermittlung weiterer Token beziehungsweise einer neuen Quote angefordert wird. Auch die an den Vergebührungsserver zu sendenden Berichte können in der Verwaltungseinheit erzeugt werden.

Der Netzübergang-Netzknoten weist vorzugsweise eine Sendeeinheit zum Senden von Ergebnissen der Verwaltungseinheit auf. Das ermittelte Ergebnis kann beispielsweise das Aufbrauchen einer gewissen Anzahl von Token sein. Weiterhin kann das Ergebnis die Zeitdauer des Vergebührungszeitraums ausgedrückt durch die Anfangszeit und die Endzeit sein.

Die Verwaltungseinheit ist vorzugsweise zur Verwaltung von Abrechnungstoken ausgelegt, wobei die Verwaltung der Abrechnungstoken vorzugsweise durch inkrementelle Nutzung der von dem Vergebührungsserver empfangenen Anzahl von Abrechnungstoken erfolgt.

Der Netzübergang-Netzknoten ist vorzugsweise zur Durchführung des erfindungsgemäßen Verfahrens ausgelegt und unterstützt somit die unterschiedlichen Verfahrensschritte.

Gemäß einem weiteren Aspekt betrifft die Erfindung einen Vergebührungsserver für ein Funk-Kommunikationssystem, der sich dadurch auszeichnet, dass dieser eine Einheit zum Senden von Vergebührungsinformationen aufweist. Im Vergleich zu herkömmlichen Vergebührungsservern, die insbesondere zum Empfangen von Informationen zur Berechnung der zu erhebenden Gebühr ausgelegt sind, ist der erfindungsgemäße Vergebührungsserver zum Senden von Vergebührungsinformationen an den Netzübergang-Netzwerkknoten ausgelegt. Hierbei werden insbesondere Regeln zur Art der Vergebührung, zum Beispiel Abrechnungsmodi, übermittelt.

Der Vergebührungsserver weist vorzugsweise eine Einheit zum Empfangen von Vergebührungsinformationen auf. Die empfangenen Vergebührungsinformationen stellen zum Beispiel den Beginn und die Endzeit des Vergebührungszeitraums und/oder die Anzahl verwendeter Token dar.

Schließlich besitzt der Vergebührungsserver vorzugsweise eine Einheit zum Interpretieren empfangener Vergebührungsinformationen. Die Interpretationseinheit dient insbesondere der Interpretation von Informationen, die bezüglich der zur Verfügung gestellten Abrechnungstoken empfangen wurden. In der Interpretationseinheit kann jedem verbrauchten Token die angemessene Gebühr, die an die Berechnungsdauer angepasst ist, zugeordnet werden.

Die Einheiten des Netzübergang-Netzknoten und des Vergebührungsservers können auch als Programm oder Programmteil realisiert sein.

Der Vergebührungsserver ist vorzugsweise zur Durchführung des erfindungsgemäßen Verfahrens ausgelegt.

Weiterhin betrifft die Erfindung ein System zur Vergebührung von Datenverkehr in einem Funk-Kommunikationssystem, das zumindest ein mobiles Endgerät und zumindest ein Dienstenetz mit zumindest einem Netzübergang-Netzknoten umfasst. Das System zeichnet sich dadurch aus, dass der Netzübergang-Netzknoten eine Verwaltungseinheit zur Verwaltung von Berechnungszeiträumen für die Vergebührung einer Verwendung in einer bestehenden Kommunikationsverbindung zu dem Netzübergang-Netzknoten, aufweist.

Der Netzübergang-Netzknoten ist hierbei vorzugsweise mit einem Vergebührungsserver über eine Schnittstelle verbunden, die zur Übermittlung von Eingangsgrößen für die Verwaltungseinheit in dem Netzübergang-Netzknoten ausgelegt ist. Der Netzübergang-Netzknoten ist vorzugsweise mit einem Vergebührungsserver über eine Schnittstelle verbunden, die zur Übermittlung von Ergebnissen der Verwaltungseinheit in dem Netzübergang-Netzknoten ausgelegt ist. Die Schnittstelle zwischen dem Netzübergang-Netzknoten und dem Vergebührungsserver ist vorzugsweise zur Übertragung von Token ausgelegt. Die Schnittstelle ist besonders bevorzugt zur Durchführung von Sitzungen nach dem Diameter-Protokoll ausgelegt. In den nach diesem Protokoll gesendeten Signalen können Eingangsgrößen für den Netzübergang-Netzknoten und Ergebnisse der Verwaltung der Berechnungszeiträume, das heißt des Quotenmanagements beispielsweise als Attribut-Werte-Paar (AVP) übermittelt werden.

Das erfindungsgemäße System weist vorzugsweise einen erfindungsgemäßen Netzübergang-Netzknoten auf. Weiterhin weist das erfindungsgemäße System vorzugsweise einen erfindungsgemäßen Vergebührungsserver auf. Schließlich ist das erfindungsgemäße System zur Durchführung des erfindungsgemäßen Verfahrens ausgelegt.

Vorteile und Merkmale, die bezüglich des Verfahrens beschrieben werden, gelten ― soweit anwendbar- auch für den erfindungsgemäßen Netzübergang-Netzknoten, den erfindungsgemäßen Vergebührungsserver und/oder das erfindungsgemäße System, sowie jeweils umgekehrt.

Die Erfindung wird im Folgenden erneut anhand der beiliegenden Figuren erläutert. Es zeigen:
Figur 1: eine schematische Darstellung des Aufbaus einer Ausführungsform des erfindungsgemäßen Systems;
Figur 2: ein Zeitdiagramm mit Vergebührungszeiträumen nach zwei unterschiedlichen Abrechnungsmodi;
Figur 3: ein Zeitdiagramm mit dem Quotenmanagement gemäß einer Ausführungsform eines ersten Abrechnungsmodus;
Figur 4: ein Zeitdiagramm mit dem Quotenmanagement gemäß einer weiteren Ausführungsform des ersten Abrechnungsmodus;
Figur 5: ein Zeitdiagramm mit dem Quotenmanagement gemäß einer Ausführungsform eines zweiten Abrechnungsmodus;
Figur 6: ein Flussdiagramm entsprechend dem schematischen Ablauf der Vergebührung nach einem ersten Abrechnungsmodus; und
Figur 7: ein Flussdiagramm entsprechend dem schematischen Ablauf der Vergebührung nach einem zweiten Abrechnungsmodus.

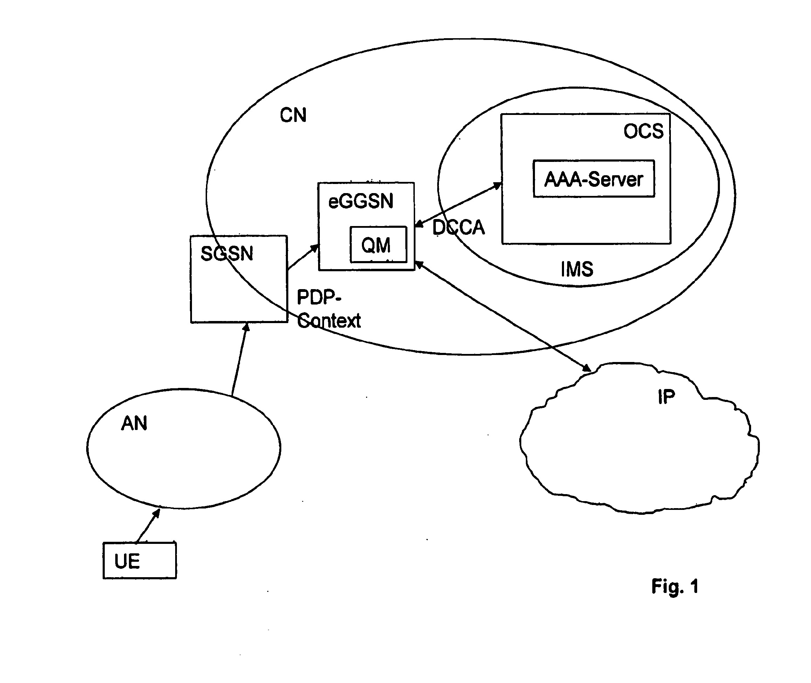

In der Figur 1 ist schematisch der Aufbau einer Ausführungsform des erfindungsgemäßen Systems dargestellt.

Ein mobiles Endgerät UE (User Equipment) kann über ein 2G oder 3G Zugangsnetz AN (Access Network) eine Kommunikationsverbindung (PDP-Context) zu einem Kernnetzwerk CN (Core Network) aufbauen. Über diese Verbindung kann beispielsweise auf das Internet (IP) zugegriffen werden. In der dargestellten Ausführungsform weist das Kernnetzwerk CN einen Serving GPRS Support Node (SGSN) auf, über den das Zugangsnetzwerk AN an das Kernnetzwerk CN angeschlossen ist.

Auf der Seite des Kernnetzwerkes CN wird diese Verbindung über einen Netzübergang-Netzknoten GGSN geleitet. Der Aufbau des PDP-Contexts wird von dem Netzübergang-Netzknoten GGSN an ein Online Charging System OCS, das einen Vergebührungsserver AAA-Server umfasst, angezeigt. Das Online Charging System OCS ist in der dargestellten Ausführungsform Teil des IP-Multimedia Subsystems (IMS). Die Anzeige des bestehenden PDP-Contexts kann über die Angabe einer Nutzeridentifikation, wie beispielsweise der so genannten User-ID und PDP-Context-Informationen erfolgen. Als Antwort auf diese Anzeige kann der Netzübergang-Netzknoten GGSN von dem Vergebührungsserver AAA-Server eine regelbasierte ID für den Nutzer und eine Angabe darüber erhalten ob der PDP-Context für diesen Nutzer aufgebaut werden kann.

Bei der vorliegenden Erfindung wird ein verbesserter Netzübergang-Netzknotens (eGGSN), der im Folgenden auch als IPC (Intelligent Paket Core) bezeichnet wird, verwendet. Von diesem Netzübergang-Netzknoten (eGGSN) wird eine Quote zur Vergebührung des Datenverkehrs von dem Vergebührungsserver eingeholt.

Für das Einholen der Quote (Request for Quota) und die Berichterstattung an den Vergebührungsserver über die zu erhebenden Gebühren wird eine On-line Schnittstelle, die zur Echtzeit- (real-time-) Verwendung, ausgelegt ist, zur Authentifizierung, Authentifizierung und Abrechnung (AAA) verwendet. Diese Schnittstelle basiert auf der IETF-Diameter Credit Control Anwendung (DCCA) und wird zwischen dem eGGSN (IPC) und einem korrespondierenden Vergebührungsserver eingesetzt, der die AAA-Aufgaben unterstützt und auch als AAA-Server bezeichnet wird. Die Schnittstelle DCCA entspricht weitestgehend der in der Standardisierung 3GPP R6 definierten Gy-Schnittstelle.

Diese Schnittstelle DCCA und die dieser zugrunde liegende Funktion in dem verbesserten Netzübergang-Netzknoten (eGGSN, IPC) arbeiten so, dass Datenverkehr, insbesondere IP-Datenverkehr, der den eGGSN passiert, basierend auf einigen festgelegten Regeln (zum Beispiel URL, IP-Adresse, Port, und dergleichen) überprüft und kategorisiert wird. Der verbesserte Netzübergang-Netzknoten eGGSN erfragt für jede Kategorie eine Quote bevor der Datenverkehr von dem Nezübergang-Netzknoten weitergeleitet wird. Die Quote kann in dem verbesserten Netzübergang-Netzknoten eGGSN in einem Quotenmanagement QM verwaltet werden. Die Quote kann generell entweder eine zeit- oder umfangbasierte Quote oder eine Kombination der beiden sein. Für besondere Arten von Datenverkehr, wie beispielsweise den Internet-Datenverkehr, der im Folgenden auch als off-net-traffic bezeichnet wird, kann eine gesonderte Kategorie definiert sein.

Der verbesserte Netzübergang-Netzknoten eGGSN und die Schnittstelle DCCA (3GPP Gy) arbeiten hierbei nicht nur mit Zeit und Umfang-Quoten, sondern auch mit Abrechnungstoken, die auch als "Zeit-Ereigniss-Tokens" (time event tokens) bezeichnet werden. In diesem Fall kann der Server dem Netzübergang-Netzknoten eGGSN über die Schnittstelle DCCA (3GPP Gy) eine Anzahl von Zeit-Ereignis-Tokens, die Länge der Intervalle und die Art, in der diese aufgebraucht werden sollten, das heißt PM- oder CTP-basiert, zur Verfügung stellen. Die Anzahl der verbrauchten Tokens wird durch den eGGSN an den Server berichtet.

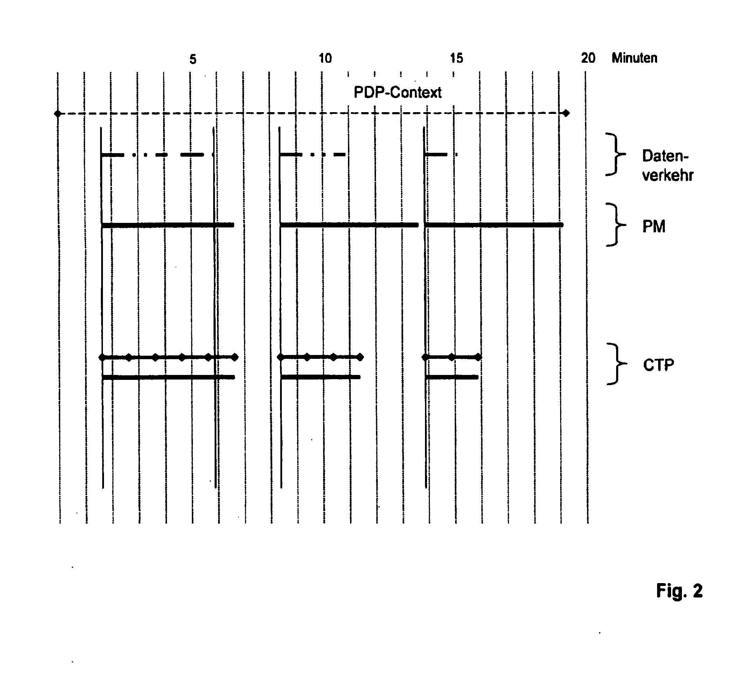

In Figur 2 sind zwei Abrechnungsmodi, nach denen Verwendungen des PDP-Contexts beziehungsweise der Datenverkehr in dem PDP-Context abgerechnet werden kann, schematisch wiedergegeben. Im oberen Bereich des Zeitdiagramms ist ein Abrechnungsmodus, bei dem eine vorgegebene Zeitdauer zur Vergebührung zugrunde gelegt wird, gezeigt. Dieser Abrechnungsmodus wird im Folgenden auch als Parkuhr-Modus (Parkmeter PM-Modus) bezeichnet. Im unteren Bereich ist ein Abrechnungsmodus mit mehreren Zeitintervallen beziehungsweise Berechnungszeiträumen, die gemeinsam einen Vergebührungszeitraum darstellen, wiedergegeben. Dieser Abrechnungsmodus wird im Folgenden auch als CTP (Continous Time Period) bezeichnet.

Der PDP-Context ist in der Figur 2 durch die gestrichelte Linie am oberen Rand angedeutet. Zum Zeitpunkt Null wird somit die Verbindung hergestellt und in dem dargestellten Beispiel nach etwa 19 Minuten beendet. Während dieser Kommunikationsverbindung können unterschiedliche Verwendungen in dem PDP-Context erfolgen. Die Verwendungen in einer Kategorie, die sich durch Datenverkehr widerspiegeln, sind in der Figur 2 in der zweiten Zeile dargestellt. Die unterschiedliche Dauer der Verwendung beziehungsweise des dadurch verursachten Datenverkehrs ist durch die Striche beziehungsweise Punkte in dem Zeitdiagramm angedeutet. Jede Linie und jeder Punkt symbolisieren hierbei eine Verwendung des PDP-Contexts, das heißt Datenverkehr in dem PDP-Context.

Die erste Verwendung findet nach etwa anderthalb Minuten statt. Zu diesem Zeitpunkt beginnt der für diesen Abrechnungsmodus vorgesehene Berechnungszeitraum (PM). Ab dem Beginn des PM-Zeitraums ist die Überwachung des auftretenden Datenverkehrs in dem PDP-Context nicht mehr erforderlich. Das Ende des PM-Zeitraums ist durch Angabe der Dauer des Berechnungszeitraums festgelegt. In der dargestellten Ausführungsform wird beispielsweise ein Berechnungszeitraum, der dem Vergebührungszeitraum entspricht, von fünf Minuten eingesetzt.

Nachdem der erste Vergebührungszeitraum von fünf Minuten abgelaufen ist, erfolgt in dem dargestellten Szenario bei weiterhin bestehendem PDP-Context über einen Zeitraum von etwa zweieinhalb Minuten keine Verwendung. Anschließend findet eine weitere Verwendung statt. Durch diese weitere Verwendung nach Ablauf des Berechnungszeitraums wird ein weiterer Berechnungszeitraum begonnen, der gleichfalls den Vergebührungszeitraum darstellt. Die Dauer des in diesem Berechnungs- beziehungsweise Vergebührungszeitraum auftretenden Datenverkehrs ist für die Vergebührung erneut unerheblich. Nach Initialisierung des Vergebührungszeitraums wird dessen Ablauf abgewartet bevor ein weiterer Vergebührungszeitraum initialisiert wird. Somit wird bei der nach etwa einer Minute nach der ersten Verwendung in diesem Berechnungszeitraum und einer Pause von etwa 25 Sekunden nach dem Beenden der ersten Verwendung auftretenden weiteren Verwendung kein neuer Berechnungszeitraum gestartet. Erst nach dem Ende des Vergebührungszeitraums von fünf Minuten wird eine neue Verwendung in dem PDP-Context als Initiator für einen neuen Berechnungs- und Vergebührungszeitraum verstanden.

Sollten diese Verwendungen beziehungsweise der Datenverkehr nach der Zeit abgerechnet werden, müssten bei herkömmlichen Vergebührungssystemen bei jedem Beginn einer Verwendung und jedem Ende einer Verwendung Informationen von dem Netzübergang-Netzknoten an den Vergebührungsserver gesandt werden, damit dieser die verwendete Zeit berechnen und dem Kunden entsprechend in Rechnung stellen kann. Bei der erfindungsgemäß möglichen Abrechnung nach dem PM-Modus hingegen kann dieses aufwändige Signalisieren entfallen.

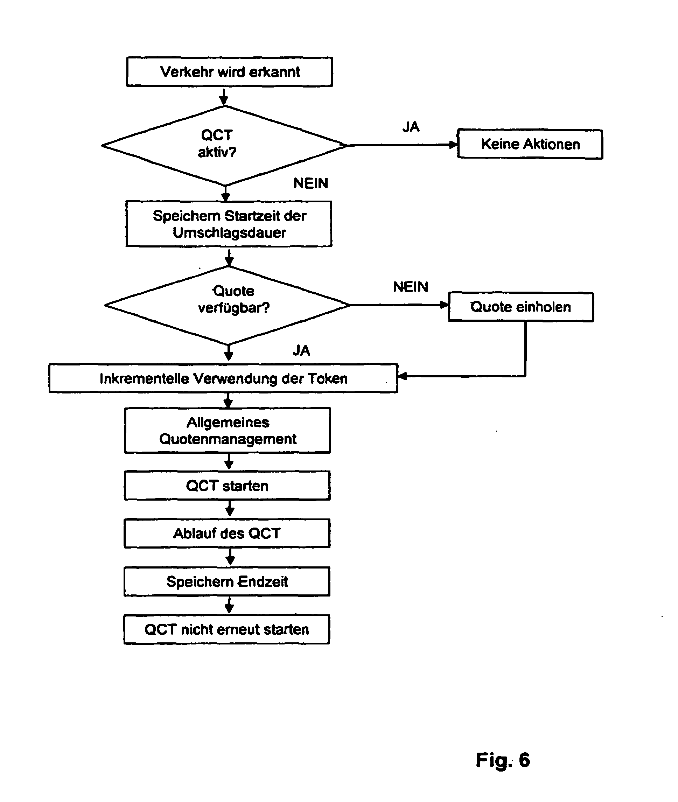

Die Überwachung der durch die Vergebührungszeit vorgegebene Zeitdauer erfolgt vorzugsweise durch eine Zeitüberwachung, insbesondere einen Timer, was unter Bezugnahme auf Figur 6 genauer erläutert wird. Ob während der Zeit, in der dieser Timer läuft beziehungsweise aktiv ist und die beispielsweise fünf Minuten beträgt, die Verwendung aufrechterhalten bleibt oder gegebenenfalls nach einer Unterbrechung erneut erfolgt, kann bei diesem Modus außer Acht gelassen werden. Somit ist die Berechnung der zu erhebenden Gebühren vereinfacht.

Obwohl in dem gezeigten Beispiel zwölf Verwendungen stattgefunden haben, ist bei dem verwendeten Abrechnungsmodus lediglich eine Speicherung und Übermittlung von drei Ergebnissen, nämlich des jeweiligen Ablaufes des entsprechenden Vergebührungszeitraums notwendig. Diese können als drei Einträge auf der Rechnung für den Kunden vermerkt werden.

In dem im unteren Bereich der Figur 2 dargestellten Abrechnungsmodus nach einer kontinuierlichen Zeitperiode (Continuous Time Period CTP) werden die oben beschriebenen Verwendungen wie folgt abgerechnet. Bei Beginn einer Verwendung wird ein erstes Intervall mit einer vorgegebenen Dauer gestartet. Das Intervall ist durch die Linie zwischen zwei Rauten wieder gegeben. Wie auch bei dem beschriebenen PM-Modus, ist die tatsächliche kontinuierliche Verwendung des PDP-Contexts während des Berechnungszeitraums hierfür nicht maßgeblich. Im Gegensatz zu dem PM-Modus wird allerdings bei Beendigung des Berechnungszeitraums, der in diesem Fall ein Intervall von einer Minute darstellt, der Vergebührungszeitraum nicht automatisch unterbrochen. Vielmehr wird jeweils für die Dauer eines weiteren Intervalls oder Berechnungszeitraums eine eventuell auftretende Verwendung in dem PDP-Context überwacht. Sofern innerhalb des zurückliegenden Intervalls keine Verwendung statt gefunden hat, wird die kontinuierliche Zeitperiode (CTP) als beendet erachtet. Diese CTP stellt damit den Vergebührungszeitraum dar, der in der Figur durch die untere durchgehende Linie gezeigt ist.

Die Länge der Intervalle kann beispielsweise jeweils eine Minute betragen. Der sich so ergebende Vergebührungszeitraum endet mit dem letzten Intervall, in dem eine Verwendung stattfindet. In dem dargestellten Beispiel werden somit fünf Intervalle, die einen zusammenhängenden Vergebührungszeitraum darstellen und zwei weitere Vergebührungszeiträume mit jeweils drei beziehungsweise zwei Berechnungszeiträumen für den Nutzer verbucht.

Im Vergleich zu dem PM-Modus stellt der CTP-Modus somit eine genauere Abrechnung dar. Allerdings ist der Verwaltungsaufwand für den CTP-Modus größer.

Um den Verwaltungsaufwand für die beiden Abrechnungsmodi gering zu halten, kann ein Quotenmanagement, insbesondere ein allgemeines Quotenmanagement durchgeführt und ein Quoten-Verbrauchs-Timer beziehungsweise Quota-Consumption-Timer (QCT) verwendet werden.

In dem Quotenmanagement werden insbesondere die folgenden Parameter verwendet beziehungsweise überwacht. Zum einen werden unterschiedliche Umschlagdauern überwacht. Ein weiterer Parameter ist die Länge des Berechnunszeitraums, der bei dem PM-Modus den Vergebührungszeitraum und bei dem CTP-Modus ein Intervall darstellt. Weiterhin wird das Erreichen eines vorgegebenen Schwellwertes für die Anzahl von Abrechnungstoken überwacht. Dieses Erreichen stellt das Ende eines Berichtszeitraums dar, der durch die Übermittlung der Quote, insbesondere der Abrechnungstoken an den Netzübergang-Netzknoten initiiert wurde. Die in dem Netzübergang-Netzknoten ermittelten Start-und Endzeiten für die unterschiedlichen Abrechnungsmodi werden in dem Vergebührungsserver als Liste bereitgestellt. Hierzu wird der Netzübergang-Netzknoten den Start- und Endpunkt einer jeden Umschlagdauer berichten. Die Liste wird in chronologischer Reihenfolge geführt. Für jede aktive Umschlagdauer in der Berichtzeit wird ein Eintrag erstellt. Die Startzeit wird auf den Startzeitpunkt der Umschlagdauer gelegt, auch wenn die Umschlagdauer vor dem Beginn der Berichtszeit liegt.

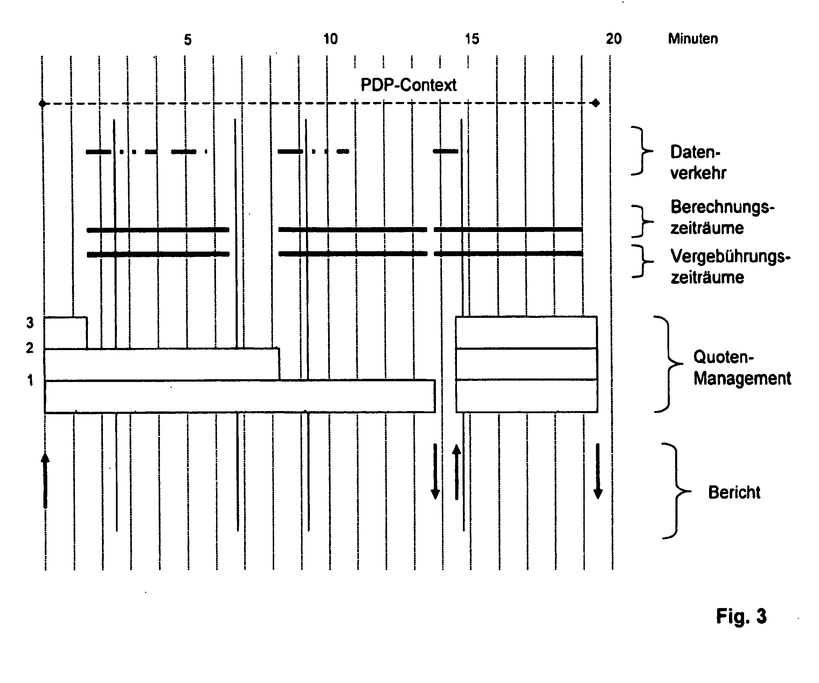

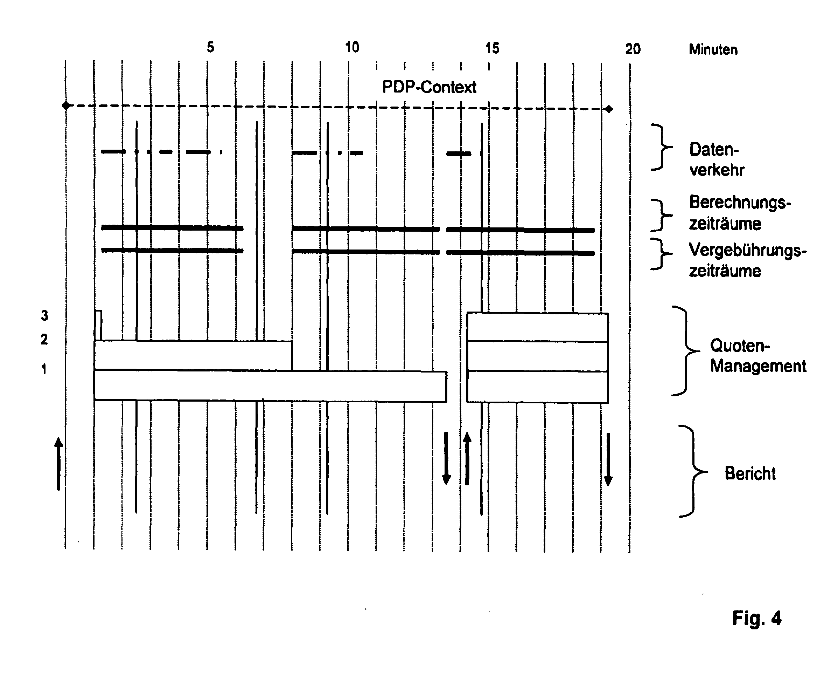

In den Figuren 3 und 4 sind mögliche Beispiele für das Quotenmanagement für den PM-Modus gezeigt. Bei dem dargestellten Quotenmanagement werden jeweils ein Kontingent von Abrechnungstoken und ein vorgegebener Schwellwert für die Abrechnungstoken verwendet.

Der PDP-Context und die Verwendungen entsprechen den in Figur 2 gezeigten und beschriebenen.

Bei der Herstellung des PDP-Contexts wird in dem in Figur 3 gezeigten Beispiel eine Anzahl an Abrechnungstoken von dem Vergebührungsserver an den Netzübergang-Netzknoten übermittelt. Die Abrechnungstoken sind durch die Blöcke im unteren Bereich des Diagramms gezeigt. Zugleich wird ein Schwellwert an den Netzübergang-Netzknoten übermittelt, der angibt zu welchem Zeitpunkt der Netzübergang-Netzknoten an den Vergebührungsserver das Aufbrauchen der Abrechnungstokens signalisieren soll. Bei Beginn der ersten Verwendung einer Kategorie, für die die Abrechnung nach dem PM-Modus für den Nutzer hinterlegt ist, wird ein erster Token als verwendet erachtet und die Anzahl der Token somit um Eins verringert. Gleichzeitig wird ein Timer gestartet, der für die vorgegebene Dauer des Berechnungszeitraums, die hier fünf Minuten beträgt, läuft.

Während der Timer, der auch als Quoten-Verbrauchs-Timer (QCT) bezeichnet wird, läuft, ist eine Überwachung des tatsächlichen Datenverkehrs nicht notwendig. Erst nach dem Ablauf des ersten QCT-Timers wird das Stattfinden einer weiteren Verwendung überwacht. Sobald dieses auftritt wird der nächste QCT-Timer gestartet und die Anzahl der Token erneut um Eins verringert.

In dem dargestellten Beispiel wurden drei Token an den Netzübergang-Netzknoten übermittelt. Sobald der dritte QCT-Timer gestartet wird, ist das Kontingent an Token somit aufgebraucht. Der Schwellwert, der an den Netzübergang-Netzknoten übermittelt wurde, war auf Null gesetzt. Mit dem Starten des dritten QCT-Timers wird somit der Schwellwert erreicht und der Netzübergang-Netzknoten kann dies in einem Bericht an den Vergebührungsserver signalisieren.

Nach Erhalt des Berichts über das Erreichen des Schwellwertes wird dem Netzübergang-Netzknoten erneut eine Anzahl von Token übermittelt. Diese Übermittlung kann automatisch erfolgen oder aber eine Anfrage, insbesondere ein Erfragen einer weiteren Quote von dem Netzübergang-Netzknotens voraussetzen.

In dem dargestellten Beispiel findet während dem bestehenden PDP-Context keine weitere Verwendung statt. Der Netzübergang-Netzknoten wird somit bei Beendigung des PDP-Contexts an den Vergebührungsserver signalisieren, dass er keinen der übermittelten Token verbraucht hat.

Für die notwendige Kommunikation zwischen dem Vergebührungsserver und dem Netzübergang-Netzknoten werden bei dem erfindungsgemäßen Verfahren unter Benutzung von Token lediglich vier Signale benötigt. Bei einer Kommunikation ohne Token, wären sechs Signale notwendig gewesen. Durch Erhöhung der Anzahl der Token kann diese Signalmenge noch weiter verringert werden.

Der Abrechnungsverlauf, der in Figur 4 dargestellt ist, entspricht im Wesentlichen dem, der in Figur 3 gezeigt ist. Allerdings wird bei dieser Ausführungsform die Anzahl der Token nicht bei der Herstellung des PDP-Contexts an den Netzübergang-Netzknoten übermittelt, sondern erst bei der ersten Verwendung in einer bestehenden Kommunikationsverbindung. Tritt während des PDP-Contexts keine Verwendung der Kategorie auf, die nach dem PM-Modus abzurechnen ist, so ist auch keine Signalisierung notwendig.

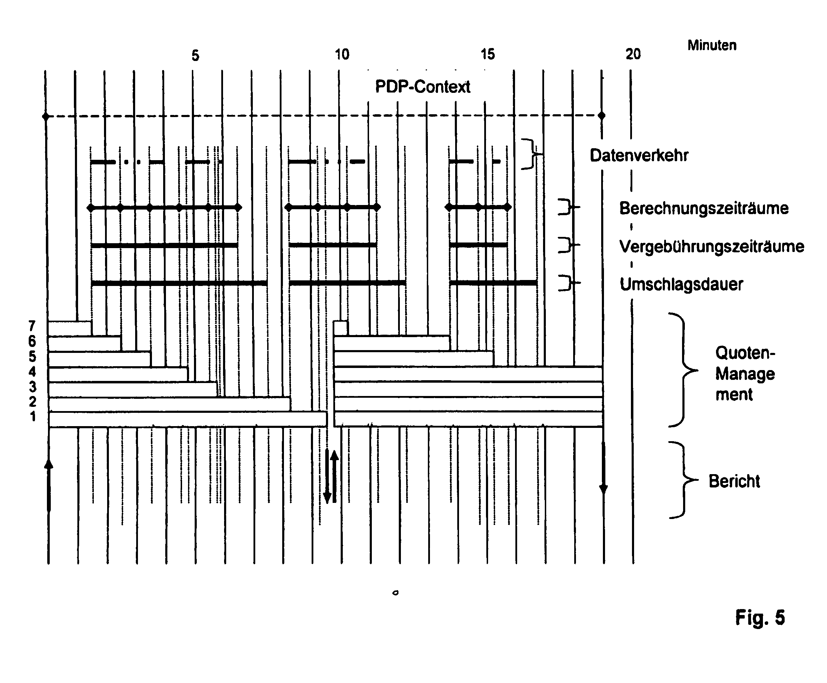

In Figur 5 ist schließlich eine Abrechnung nach dem CTP-Modus dargestellt. Bei Herstellung des PDP-Contexts werden dem Netzübergang-Netzknoten eine Anzahl von Token sowie ein Schwellwert übermittelt. Bei der ersten Verwendung wird das erste CTP-Intervall, das einem Berechnungszeitraum entspricht, gestartet. Gleichzeitig wird die Anzahl der verfügbaren Token um Eins herabgesetzt. Nach dem Ablauf eines jeden Intervalls wird ein neues Intervall gestartet. Eine Nutzung der Token erfolgt allerdings nicht automatisch bei Beginn eines neuen Intervalls, sondern erst bei einer ersten Verwendung in dem Intervall. Bei einer weiteren Verwendung in einem laufenden Intervall wird hingegen kein weiterer Token verwendet. Um dieser retrospektiven Betrachtungsweise Rechnung tragen zu können wird bei dem CTP-Modus eine so genannte Umschlagdauer verwendet, die um ein Intervall länger als der eigentliche Vergebührungszeitraum ist. Bei Abschluss eines Intervalls wird für die Dauer eines weiteren Intervalls das Auftreten von Verwendungen überwacht. Erst wenn während der Dauer eines Intervalls keine Verwendung auftritt, gilt der Vergebührungszeitraum als beendet.

Die Token für die einzelnen Intervalle werden in diesem Abrechnungsmodus somit nicht bei Beginn eines Intervalls, sondern zu dem Zeitpunkt der Verwendung, die die Abrechnung eines neuen Intervalls notwendig macht, verwendet. Somit wird der Token erst später als der Beginn des eigentlichen Intervalls verwendet beziehungsweise abgezogen.

In dem dargestellten Beispiel sind sieben Abrechnungstoken an den Netzübergang-Netzknoten übermittelt worden. Beim Erreichen des Endes des ersten Vergebührungszeitraums sind diese noch nicht aufgebraucht, da der erste Vergebührungszeitraum lediglich fünf Intervalle umfasst. Erst nach dem Aufbrauchen aller Abrechnungstoken wird an den Vergebührungsserver berichtet und eine neue Quote eingeholt. In dem gezeigten Beispiel wurden erneut sieben Token übermittelt, bei Beendung des PDP-Contexts aber nur drei Token verbraucht. Der Netzübergang-Netzknoten berichtet somit über die Anzahl der verbrauchten Token.

Auch für diesen Abrechnungsmodus sind lediglich vier Signale zwischen dem Netzübergang-Netzknoten und dem Vergebührungsserver notwendig.

Es ist auch möglich den Schwellwert auf einen Wert größer als Null zu setzen. Auf diese Weise kann sichergestellt werden, dass stets ein Token auf dem Netzübergang-Netzknoten zur Verfügung steht und kein Fall eintreten kann, in dem eine Verwendung stattfindet aber kein Token zur Verfügung steht.

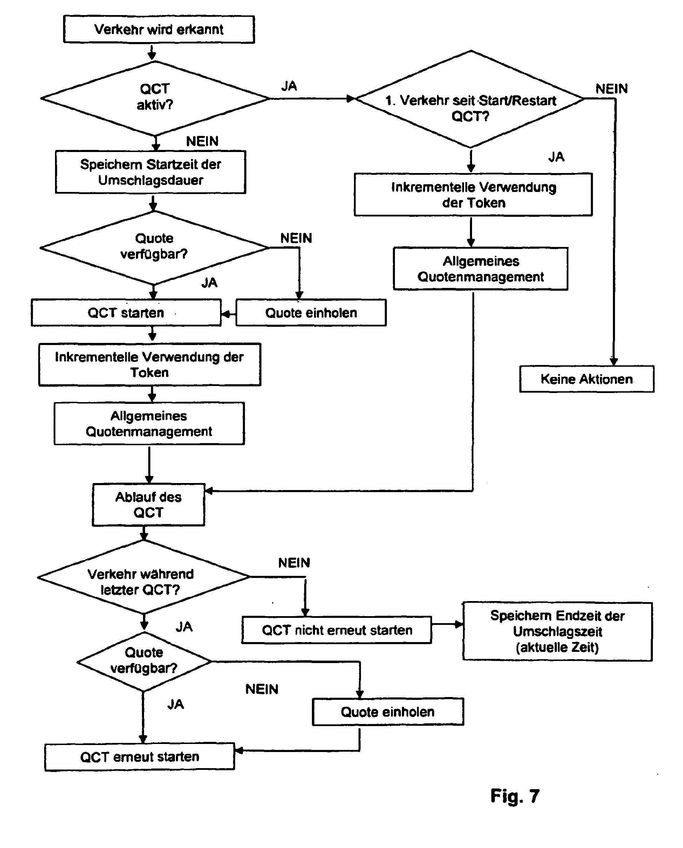

Die in dem Netzübergang-Netzknoten durchzuführenden Schritte werden im Folgenden unter Bezugnahme auf die Figuren 6 und 7 erneut beschrieben. In der Figur 6 ist der Ablauf für eine Abrechnung nach dem PM-Modus gezeigt.

Sobald Datenverkehr erkannt wird, wird überprüft, ob der Quota-Consumption-Timer (QCT) aktiv ist, das heißt bereits ein Berechnungszeitraum läuft. Ist dies der Fall, so liegt in dem Netzübergang-Netzknoten die Information vor, über welchen Abrechnungsmodus der Datenverkehr abzurechnen ist.

Bei einer Abrechnung nach dem PM-Modus werden beim Erkennen eines aktivierten QCT keine weiteren Schritte ausgeführt, da der Datenverkehr bereits erfasst wird. Anderenfalls, das heißt, wenn Datenverkehr erkannt wird, aber der QCT nicht aktiviert ist, wird die Anfangszeit einer Umschlagdauer gespeichert. Somit wird der Beginn des Berechnungszeitraums festgelegt. Der Netzübergang-Netzknoten überprüft nun, ob für die Verwendung der Kategorie, die den Datenverkehr verursacht, beziehungsweise für den Datenverkehr eine Quote verfügbar ist. Die Quote umfasst insbesondere eine Anzahl von Abrechnungstoken, die Dauer des Berechnungszeitraumes und einen Schwellwert für die Anzahl der Abrechnungstoken, sowie die Angabe darüber, nach welchem Abrechnungsmodus der Datenverkehr abzurechnen ist. Ist eine Quote verfügbar und handelt es sich um eine Abrechnung, die nach dem PM-Modus erfolgen soll, so wird die inkrementelle Nutzung der Quote initiiert. Dies bedeutet, dass bei Beginn des Berechnungszeitraums die Anzahl der verwendeten Token (used_tokens) um Eins erhöht wird (used_tokens = used_tokens+1).

Zudem wird ein allgemeines Quotenmanagement ausgeführt, in dem der Schwellwert oder der Verbrauch der Quote überwacht wird. Das Überschreiten der Quote kann beispielsweise auftreten, wenn kein Schwellwert gegeben wurde, aber keine Abrechnungstoken mehr auf dem Netzübergang-Netzknoten zur Verfügung stehen.

Außerdem wird der Quota-Consumption-Timer (QCT) gestartet. Das Starten des QCT erfolgt vorzugsweise gleichzeitig mit dem Initiieren der Nutzung der Abrechnungstoken und dem allgemeinen Quotenmanagement.

Ist hingegen keine Quote verfügbar, wird zunächst von dem Vergebührungsserver eine Quote für die Verwendung erfragt. Bei dieser Anfrage wird die Kategorie der Verwendung angegeben. Nach Erhalt der Quote, wird, wie oben beschrieben, vorgegangen. Insbesondere wird die inkrementelle Nutzung der Abrechnungstoken initiiert (used_tokens = used_tokens+1), das allgemeine Quotenmanagement und der Quota-Consumption-Timer gestartet.

Ist das Ende des Quota-Consumption-Timers erreicht, wird dieser nicht erneut gestartet, sondern die Endzeit der Umschlagsdauer gespeichert. Ein erneutes Starten des QCT findet erst statt, wenn eine weitere Verwendung in dem PDP-Context erkannt wird. Die Umschlagsdauer entspricht dem Vergebührungszeitraum, die dem Nutzer in Rechnung gestellt wird. Diese kann auf der Rechnung durch einen entsprechenden Strich, wie in Figur 2 und 3 gezeigt vermerkt werden.

Wie sich aus dieser Beschreibung ergibt, sind die in der Figur 6 gezeigten Aktionen nicht zwangsweise in der dargestellten Reihenfolge auszuführen. Einige der Schritte werden vorzugsweise gleichzeitig durchgeführt.

Unter Bezugnahme auf die Figur 7 wird nun der Ablauf bei einer Abrechnung nach dem CTP-Modus beschrieben.

Wie auch bei der Abrechnung nach dem PM-Modus wird zunächst überprüft, ob der QCT aktiv ist. Ist der QCT nicht aktiv, so wird zunächst die Startzeit als Beginn der Umschlagsdauer gespeichert. Anschließend wird überprüft, ob eine Quote für die Verwendung verfügbar ist und diese gegebenenfalls eingeholt. Bei Vorliegen einer Quote wird der QCT gestartet und einer der vorliegenden Abrechnungstoken verwendet. Gleichzeitig wird das allgemeine Quotenmanagement durchgeführt, um zu überprüfen, ob der Schwellwert erreicht ist oder die Quote überschritten ist.

Beim Ablauf des QCT wird bei dem CTP-Modus überprüft, ob während des letzten QCT, das heißt während des letzten Berechnungszeitraums, Datenverkehr aufgetreten ist. Ist dies der Fall, so wird überprüft, ob eine Quote vorhanden ist und beim Vorliegen einer Quote oder nach dem Einholen einer Quote wird der QCT erneut gestartet. Dass keine Quote vorhanden ist, wird, nur in Ausnahmefällen auftreten, in denen beispielsweise eine Quote von Null übermittelt wurde.

Bei dem erneuten Start des QCT erfolgt die inkrementelle Nutzung der Abrechnungstoken nicht.

Durch das automatische Starten des QCT wird der aus kontinuierlich aufeinander folgenden Berechnungszeiträumen bestehende Vergebührungszeitraum erhalten. Die Überprüfung, ob während der letzten Laufdauer des QCT Datenverkehr stattgefunden hat, ist notwendig, da bei Ablauf des QCT und vorliegendem Datenverkehr während der Laufdauer des letzten QCT der QCT automatisch neu gestartet wird und somit gegebenenfalls ein Zeitraum von dem QCT abgedeckt wird, in dem kein Datenverkehr stattgefunden hat und der dem Nutzer somit nicht in Rechnung gestellt werden soll.

Wird bei der Überprüfung erkannt, dass während der letzten Laufdauer des QCT kein Datenverkehr stattgefunden hat, so wird der QCT nicht erneut gestartet und die Endzeit der Umschlagdauer, das heißt die aktuelle Zeit, gespeichert. Zu diesem Zeitpunkt ist der kontinuierliche Vergebührungszeitraum abgeschlossen, dessen Länge der Umschlagdauer abzüglich eines Intervalls entspricht. Bei erneutem Auftreten von Datenverkehr wird somit eine neue kontinuierliche Zeitdauer gestartet.

Da, wie oben beschrieben, der QCT bei dem CTP-Modus automatisch gestartet wird und eine Nutzung eines Abrechnungstoken bei dem erneuten Start nicht automatisch erfolgt, muss bei Erkennen eines Datenverkehrs bei aktivem QCT zunächst überprüft werden, ob es sich um den ersten Datenverkehr seit dem Start beziehungsweise erneuten Start des QCT handelt. Ist dies der Fall, so wird ein Abrechnungstoken verwendet und das allgemeine Quotenmanagement durchgeführt. Nach Ablauf des QCT wird, wie oben beschrieben weiter vorgegangen. Handelt es sich nicht um den ersten Datenverkehr seit dem erneuten Start des QCT, so ist der Datenverkehr bereits von dem Abrechnungsmodus erfasst und es sind keine weiteren Aktionen notwendig.

Mit der vorliegenden Erfindung wird es, insbesondere durch die Verwendung eines verbesserten Netzübergang-Netzknoten (eGGSN) und einer geeignet ausgelegten Schnittstellt (VF DCCA) möglich, Datenverkehr nicht nur nach Zeit und Umfang, das heißt mit den entsprechenden Quoten abzurechnen, sondern auch eine ereignisbasierte Abrechnung durchführen zu können. Diese ereignisbasierte Abrechnung kann insbesondere durch die Verwendung von Token realisiert werden. Hierdurch kann die Kommunikation zwischen dem Netzübergang-Netzknoten und dem Vergebührungsserver auf ein Minimum reduziert werden.

## Patentansprüche

1. Verfahren zur Vergebührung von Datenverkehr in einem Funk-Kommunikationssystem, das zumindest ein mobiles Endgerät (UE) und zumindest ein Dienstenetz (IMS) mit zumindest einem Netzübergang-Netzknoten (GGSN) umfasst, **dadurch gekennzeichnet, dass** der Netzübergang-Netzknoten (GGSN) über eine Schnittstelle (DCCA) mit einem Vergebührungsserver (AAA) mindestens eine Eingangsgröße für die Verwaltung von Berechnungszeiträumen (PM / CTP-Intervall) empfängt, mindestens ein Berechnungszeitraum (PM / CTP-Intervall), der zumindest einen Teil eines Vergebührungszeitraums darstellt (PM/CTP), festgelegt wird und durch Datenverkehr in einer bestehenden Verbindung (PDP Context) zu dem Netzübergang-Netzknoten (GGSN) initiiert wird und die Verwaltung des mindestens einen Berechnungszeitraums (PM / CTP-Intervall) in dem Netzübergang-Netzknoten (GGSN) erfolgt, wobei die Eingangsgröße die I.-änge des Berechnungszeitraums (PM / CTP-Intervall) umfasst und ein Timer gestartet wird, sobald ein Berechnungszeitraum beginnt und erst nach Ablauf des Timers das Stattfinden von Datenverkehr erneut überwacht wird.

2. Verfahren nach Anspruch 1, **dadurch gekennzeichnet, dass** der Netzübergang-Netzknoten (GGSN) über die Schnittstelle (DCCA) mit einem Vergebührungsserver (AAA) mindestens ein Ergebnis der Verwaltung der Berechnungszeiträume (PM / CTP-Intervall) übermittelt.

3. Verfahren nach einem der Ansprüche 1 oder 2, **dadurch gekennzeichnet, dass** die mindestens eine Eingangsgröße für die Verwaltung von Berechnungszeiträumen (PM / CTP-Intervall) bei Herstellung der Kommunikationsverbindung (PDP-Context) übermittelt wird.

4. Verfahren nach einem der Ansprüche 1 bis 3, **dadurch gekennzeichnet, dass** die mindestens eine Eingangsgröße für die Verwaltung von Berechnungszeiträumen (PM / CTP-Intervall) eine Anzahl von Abrechnungstoken darstellt.

5. Verfahren nach einem der Ansprüche 1 bis 4, **dadurch gekennzeichnet, dass** die Eingangsgröße eine Angabe über den zu verwendenden Abrechnungsmodus umfasst.

6. Verfahren nach einem der Ansprüche 4 oder 5, **dadurch gekennzeichnet, dass** die Eingangsgröße einen Token-Schwellwert umfasst.

7. Verfahren nach Anspruch 6, **dadurch gekennzeichnet, dass** das Ergebnis der Verwaltung von Berechnungszeiträumen, das übermittelt wird, das Erreichen des Token-Schwellwertes ist.

8. Verfahren nach einem der Ansprüche 4 bis 7, **dadurch gekennzeichnet, dass** in dem Netzübergang-Netzknoten (GGSN) beim Beginn jedes Berechnungszeitraums (PM / CTP-Intervall) die Anzahl der Token um Eins verringert wird.

9. Verfahren nach einem der Ansprüche 1 bis 8, **dadurch gekennzeichnet, dass** Datenverkehr (IP-Traffic), der in einer aufgebauten Kommunikationsverbindung (PDP-Context) über den Netzübergang-Netzknoten (GGSN) fließt, beim Passieren des Netzübergang-Netzknotens (GGSN) kategorisiert wird.

10. Verfahren nach einem der Ansprüche 1 bis 9, **dadurch gekennzeichnet, dass** der Berechnungszeitraum (PM/CTP-Intervall) in Abhängigkeit eines Abrechnungsmodus den gesamten Vergebührungszeitraum (PM) oder einen Teil des Vergebührungszeitraums (CTP-Intervall) darstellt.

11. Verfahren nach einem der Ansprüche 1 bis 10, **dadurch gekennzeichnet, dass** die Verwendung, die den Berechnungszeitraum (PM/CTM-Intervall) bestimmt, eine vorbestimmte Verwendung einer NutzungsKategorie darstellt, wobei die vorbestimmte Verwendung einer NutzungsKategorie optional die erste Verwendung in der bestehenden Verbindung (PDP Context) darstellt und/oder eine weitere Verwendung in der Verbindung (PDP-Context) darstellt, deren Beginn nicht in einem laufenden Vergebührungszeitraum (PM / CTP) liegt.

12. Verfahren nach einem der Ansprüche 1 bis 11, **dadurch gekennzeichnet, dass** der Vergebührungszeitraum (CTP) erst nach Ablauf einer Umschlagdauer als beendet erkannt wird, wobei die Umschlagdauer um einen Berechnungszeitraum (CTP-Intervall) länger als der Vergebührungszeitraum (CTP) ist.

13. Verfahren nach einem der Ansprüche 1 bis 12, **dadurch gekennzeichnet, dass** der Vergebührungszeitraum (PM / CTP) als beendet erkannt wird, wenn kein Datenverkehr stattfindet oder alternativ der Vergebührungszeitraum (PM / CTP) auch bei Ausbleiben von Datenverkehr weiterläuft.

14. Verfahren nach einem der Ansprüche 1 bis 13, **dadurch gekennzeichnet, dass** der Netzübergang-Netzknoten (GGSN) vor der Weiterleitung des Datenverkehrs (IP-traffic) für jede Kategorie eine Quote erfragt, wobei die Quote vorzugsweise den Abrechnungsmodus umfasst.

15. Verfahren nach einem der Ansprüche 11 bis 14, **dadurch gekennzeichnet, dass** die Kategorie in Abhängigkeit der Herkunft und/oder des Ziels der Anwendung durch die der Datenverkehr erzeugt wird, festgelegt wird.

16. Netzübergang-Netzknoten eines Funk-Kommunikationssystems, **dadurch gekennzeichnet, dass** dieser eine Einheit zum Empfang von Vergebührungsinformationen in Form von Eingangsgrößen zur Verwaltung mindestens eines Berechnungszeitraums (PM / CTP-Interwall) von einem Vergebührungsserver (AAA) des Funk-Kommunikationssystems und eine Verwaltungseinheit zur Verwaltung von Berechnungszeiträumen für die Vergebührung von Datenverkehr in einer in dem Funk-Kommunikationssystem bestehenden Verbindung (PDP-Context) aufweist, wobei die Verwaltungseinheit einen Timer aufweist, der gestartet wird, wenn ein Berechnungszeitraum beginnt und erst nach Ablauf des Timers das Stattfinden von Datenverkehr erneut überwacht wird.

17. Netzübergang-Netzknoten nach Anspruch 16, **dadurch gekennzeichnet, dass** dieser eine Einheit zum Interpretieren der empfangenen Vergebührungsinformationen aufweist und optional eine Sendeeinheit zum Senden von Ergebnissen der Verwaltungseinheit aufweist.

18. Netzübergang-Netzknoten nach einem der Ansprüche 16 oder 17, **dadurch gekennzeichnet, dass** die Verwaltungseinheit zur Verwaltung von Abrechnungstoken ausgelegt ist.

19. Netzübergang-Netzknoten nach einem der Ansprüche 16 bis 18, **dadurch gekennzeichnet, dass** dieser zur Durchführung des Verfahrens nach einem der Ansprüche 1 bis 15 ausgelegt ist.

20. Vergebührungsserver für ein Funk-Kommunikationssystem, **dadurch gekennzeichnet, dass** dieser ein Einheit zum Senden von Vergebührungsinformationen in Form der Länge des Berechnungszeitraums (PM/CTP-Intervall) aufweist.

21. Vergebührungsserver nach Anspruch 20, **dadurch gekennzeichnet, dass** dieser eine Einheit zum Empfangen von Vergebührungsinformationen aufweist und/oder eine Einheit zum Interpretieren empfangener Vergebührungsinformationen aufweist.

22. Vergebührungsserver nach einem der Ansprüche 20 oder 21, **dadurch gekennzeichnet, dass** dieser zur Durchführung des Verfahrens nach einem der Ansprüche 1 bis 15 ausgelegt ist.

23. System zur Vergebührung von Datenverkehr in einem Funk-Kommunikationssystem, das zumindest ein mobiles Endgerät (UE) und zumindest ein Dienstenetz (IMS) mit zumindest einem Netzübergang-Netzknoten (GGSN) umfasst, **dadurch gekennzeichnet, dass** der Netzübergang-Netzknoten (GGSN) eine Verwaltungseinheit zur Verwaltung von Berechnungszeiträumen für die Vergebührung von Dakenverkehr in einen bestehenden Verbindung (PDP Context) zu dem Netzübergang-Netzknoten (GGSN), aufweist. wobei die Verwaltungseinheit einen Timer aufweist, der gestartet wird, wenn ein Berechnungszeitraum beginnt und erst nach Ablauf des Timers das Stattfinden von Dakenverkehr erneut überwacht wird.

24. System nach Anspruch 23, **dadurch gekennzeichnet, dass** der Netzübergang-Netzknoten (GGSN) mit einem Vergebührungsserver (AAA) über eine Schnittstelle (DCCA) verbunden ist, die zur Übermittlung von Eingangsgrößen für die Verwaltungseinheit in dem Netzübergang-Netzknoten (GGSN) ausgelegt ist.

25. System nach einem der Ansprüche 23 oder 24, **dadurch gekennzeichnet, dass**, der Netzübergang-Netzknoten (GGSN) mit einem Vergebührungsserver (AAA) über eine Schnittstelle (DCCA) verbunden ist, die zur Übermittlung von Ergebnissen der Verwaltungseinheit in dem Netzübergang-Netzknoten (GGSN) ausgelegt ist.

26. System nach einem der Ansprüche 23 bis 25, **dadurch gekennzeichnet, dass** die Schnittstelle (DCCA) zwischen dem Netzübergang-Netzknoten (GGSN) und dem Vergebührungsserver (AAA) zur Übertragung von Token ausgelegt ist.

27. System nach Anspruch 24 bis 26, **dadurch gekennzeichnet, dass** die Schnittstelle zur Durchführung von Sitzungen nach dem Diameter-Protokoll ausgelegt ist.

28. System nach einem der Ansprüche 23 bis 27, **dadurch gekennzeichnet dass** dieses einen Netzübergang-Netzknoten nach einem der Ansprüche 16 bis 19 aufweist.

29. System nach einem der Ansprüche 23 bis 28, **dadurch gekennzeichnet, dass** dieses einen Vergebührungsserver nach einem der Ansprüche 20 bis 22 aufweist.

30. System nach einem der Ansprüche 23 bis 29, **dadurch gekennzeichnet, dass** dieser zur Durchführung des Verfahrens nach einem der Ansprüche 1 bis 15 ausgelegt ist.

## Claims

1. Method of charging data traffic in a radio communications system which comprises at least one mobile terminal (UE) and at least one service network (IMS) with at least one network transition network node (GGSN), **characterised in that** the network transition network node (GGSN) receives at least one input variable for managing calculation periods (PM/CTP interval) via an interface (DCCA) with a charging server (AAA), at least one calculation period (PM/CTP interval) which constitutes at least a part of a charging period (PM/CTP) is determined and is initiated by data traffic in an existing connection (PDP context) to the network transition network node (GGSN), and the management of the at least one calculation period (PM/CTP interval) is carried out in the network transition network node (GGSN), the input variable comprising the length of the calculation period (PM/CTP interval), and a timer is started as soon as a calculation period begins and the presence of data traffic is not monitored again until after the timer has expired.

2. Method according to claim 1, **characterised in that** the network transition network node (GGSN) transmits at least one result of the management of the calculation periods (PM/CTP interval) via the interface (DCCA) to a charging server (AAA).

3. Method according to one of claims 1 or 2, **characterised in that** the at least one input variable for managing calculation periods (PM/CTP interval) is transmitted as the communications link is established (PDP context).

4. Method according to one of claims 1 to 3, **characterised in that** the at least one input variable for managing calculation periods (PM/CTP interval) constitutes a number of charging tokens.

5. Method according to one of claims 1 to 4, **characterised in that** the input variable comprises information as to the charging mode that is to be used.

6. Method according to one of claims 4 or 5, **characterised in that** the input variable comprises a token threshold value.

7. Method according to claim 6, **characterised in that** the result of the management of calculation periods that is transmitted is the reaching of the token threshold value.

8. Method according to one of claims 4 to 7, **characterised in that** in the network transition network node (GGSN) at the start of each calculation period (PM/CTP interval) the number of tokens is reduced by one.

9. Method according to one of claims 1 to 8, **characterised in that** data traffic (IP traffic) flowing in a communications link that has been set up (PDP context) via the network transition network node (GGSN) is categorised on passing through the network transition network node (GGSN).

10. Method according to one of claims 1 to 9, **characterised in that** the calculation period (PM/CTP interval), depending on a charging mode, constitutes the entire charging period (PM) or part of the charging period (CTP interval).

11. Method according to one of claims 1 to 10, **characterised in that** the use that determines the calculation period (PM/CTP interval) constitutes a predetermined use of a usage category, the predetermined use of a usage category optionally constituting the first use in the existing connection (PDP context) and/or a further use in the connection (PDP context), the start of which is not located in a current charging period (PM/CTP).

12. Method according to one of claims 1 to 11, **characterised in that** the charging period (CTP) is only recognised as having ended once a turnover time has expired, the turnover time being longer than the charging period (CTP) by a calculation period (CTP interval).

13. Method according to one of claims 1 to 12, **characterised in that** the charging period (PM/CTP) is recognised as having ended when there is no data traffic occurring or alternatively the charging period (PM/CTP) is still running, even if there is no data traffic.

14. Method according to one of claims 1 to 13, **characterised in that** the network transition network node (GGSN) requests a quota before passing on the data traffic IP traffic) for each category, the quota preferably comprising the charging mode.

15. Method according to one of claims 11 to 14, **characterised in that** the category is laid down as a function of the origin and/or target of the use by which the data traffic is produced.

16. Network transition network node of a radio communications system, **characterised in that** it comprises a unit for receiving charging information in the form of input variables for managing at least one calculation period (PM/CTP interval) from a charging server (AAA) of the radio communications system and a managing unit for managing calculation periods for the charging of data traffic in an existing connection (PDP context) in the radio communications system, the managing unit having a timer that is started when a calculation period begins and the presence of data traffic is not monitored again until after the timer has expired.

17. Network transition network node according to claim 16, **characterised in that** it comprises a unit for interpreting the charging information received and optionally a transmitting unit for sending the results from the managing unit.

18. Network transition network node according to one of claims 16 or 17, **characterised in that** the managing unit is designed for managing charging tokens.

19. Network transition network node according to one of claims 16 to 18, **characterised in that** it is configured to carry out the method according to one of claims 1 to 15.

20. Charging server for a radio communications system, **characterised in that** it comprises a unit for transmitting charging information in the form of the length of the calculation period (PM/CTP interval).

21. Charging server according to claim 20, **characterised in that** it comprises a unit for receiving charging information and/or a unit for interpreting the charging information received.

22. Charging server according to one of claims 20 or 21, **characterised in that** it is configured for carrying out the method according to one of claims 1 to 15.

23. System for charging data traffic in a radio communications system which comprises at least one mobile terminal (UE) and at least one service network (IMS) with at least one network transition network node (GGSN), **characterised in that** the network transition network node (GGSN) comprises a managing unit for managing calculation periods for charging data traffic in an existing connection (PDP context) to the network transition network node (GGSN), the managing unit having a timer which is started when a calculation period begins and the presence of data traffic is not monitored again until after the timer has expired.

24. System according to claim 23, **characterised in that** the network transition network node (GGSN) is connected to a charging server (AAA) via an interface (DCCA) which is designed to send input variables for the managing unit in the network transition network node (GGSN).

25. System according to one of claims 23 or 24, **characterised in that** the network transition network node (GGSN) is connected to a charging server (AAA) via an interface (DCCA) which is designed for transmitting results from the managing unit in the network transition network node (GGSN).

26. System according to one of claims 23 to 25, **characterised in that** the interface (DCCA) between the network transition network node (GGSN) and the charging server (AAA) is designed for transferring tokens.

27. System according to claims 24 to 26, **characterised in that** the interface is designed for carrying out sessions according to the diameter protocol.

28. System according to one of claims 23 to 27, **characterised in that** it comprises a network transition network node according to one of claims 16 to 19.

29. System according to one of claims 23 to 28, **characterised in that** it comprises a charging server according to one of claims 20 to 22.

30. System according to one of claims 23 to 29, **characterised in that** it is designed for carrying out the method according to one of claims 1 to 15.

## Revendications

1. Procédé pour la facturation de trafic de données dans un système de communication radio, qui comporte au moins un terminal mobile (UE) et au moins un réseau de services (IMS) ayant au moins un noeud de passerelle (GGSN), **caractérisé en ce que** le noeud de passerelle (GGSN) reçoit par l'intermédiaire d'une interface (DCCA) avec un serveur de facturation (AAA) au moins une grandeur d'entrée pour la gestion de périodes de calcul (intervalle PM/CTP), **en ce qu'**au moins une période de calcul (intervalle PM/CTP), qui représente au moins une partie d'une période de facturation (PM/CTP), est déterminée et est déclenchée par le trafic de données dans une liaison existante (contexte PDP) au noeud de passerelle (GGSN), et **en ce que** la gestion de la ou des périodes de calcul (intervalle PM/CTP) est effectuée dans le noeud de passerelle (GGSN), la grandeur d'entrée comportant la longueur de la période de calcul (intervalle PM/CTP) et une temporisation étant démarrée dès qu'une période de calcul commence et, seulement après l'expiration de la temporisation, la présence de trafic de données étant surveillée de nouveau.

2. Procédé selon la revendication 1, **caractérisé en ce que** le noeud de passerelle (GGSN) transmet par l'intermédiaire de l'interface (DCCA) avec un serveur de facturation (AAA) au moins un résultat de la gestion des périodes de calcul (intervalle PM/CTP).

3. Procédé selon l'une quelconque des revendications 1 ou 2, **caractérisé en ce que** la ou les grandeurs d'entrée pour la gestion des périodes de calcul (intervalle PM/CTP) sont transmises lors de l'établissement de la liaison de communication (contexte PDP).

4. Procédé selon l'une quelconque des revendications 1 à 3, **caractérisé en ce que** la ou les grandeurs d'entrée pour la gestion des périodes de calcul (intervalle PM/CTP) représentent un nombre de jetons de décompte.

5. Procédé selon l'une quelconque des revendications 1 à 4, **caractérisé en ce que** la grandeur d'entrée comporte une indication sur le mode de décompte à employer.

6. Procédé selon l'une quelconque des revendications 4 ou 5, **caractérisé en ce que** la grandeur d'entrée comporte une valeur de seuil de jeton.

7. Procédé selon la revendication 6, **caractérisé en ce que** le résultat de la gestion des périodes de calcul, qui est transmis, est l'obtention de la valeur de seuil de jeton.

8. Procédé selon l'une quelconque des revendications 4 à 7, **caractérisé en ce que**, dans le noeud de passerelle (GGSN), le nombre de jetons est diminué d'une unité au début de chaque période de calcul (intervalle PM/CTP).

9. Procédé selon l'une quelconque des revendications 1 à 8, **caractérisé en ce que** le trafic de données (trafic IP), qui s'écoule par l'intermédiaire du noeud de passerelle (GGSN) dans une liaison de communication établie (contexte PDP), est catégorisé lorsqu'il traverse le noeud de passerelle (GGSN).

10. Procédé selon l'une quelconque des revendications 1 à 9, **caractérisé en ce que**, en fonction d'un mode de décompte, la période de calcul (intervalle PM/CTP) représente la période de facturation totale (PM) ou une partie de la période de facturation (intervalle CTP).

11. Procédé selon l'une quelconque des revendications 1 à 10, **caractérisé en ce que** l'emploi, qui détermine la période de calcul (intervalle PM/CTP), représente un emploi prédéfini d'une catégorie d'utilisation, l'emploi prédéfini d'une catégorie d'utilisation représente en option le premier emploi dans la liaison existante (contexte PDP) et/ou un autre emploi dans la liaison (contexte PDP) dont le début n'est pas compris à l'intérieur d'une période de facturation (PM/CTP) en cours.

12. Procédé selon l'une quelconque des revendications 1 à 11, **caractérisé en ce que** l'on reconnaît que la période de facturation (CTP) est terminée seulement après l'expiration d'une durée de transition, ladite durée de transition étant plus longue d'une période de calcul (intervalle CTP) que la période de facturation (CTP).

13. Procédé selon l'une quelconque des revendications 1 à 12, **caractérisé en ce que** l'on reconnaît que la période de facturation (PM/CTP) est terminée lorsqu'il n'y a plus de trafic de données ou, en variante, lorsque la période de facturation (PM/CTP) se poursuit même s'il n'y a plus de trafic de données.

14. Procédé selon l'une quelconque des revendications 1 à 13, **caractérisé en ce que**, avant l'acheminement du trafic de données (trafic IP), le noeud de passerelle (GGSN) demande un quota pour chaque catégorie, le quota comportant de préférence le mode de décompte.

15. Procédé selon l'une quelconque des revendications 11 à 14, **caractérisé en ce que** la catégorie est déterminée en fonction de l'origine et/ou de l'objectif de l'application par laquelle le trafic de données est généré.

16. Noeud de passerelle d'un système de communication radio, **caractérisé en ce que** ledit noeud comporte une unité de réception d'informations de facturation sous forme de grandeurs d'entrée servant à la gestion d'au moins une période de calcul (intervalle PM/CTP) d'un serveur de facturation (AAA) du système de communication radio et une unité de gestion servant à la gestion des périodes de calcul pour la facturation du trafic de données dans une liaison existante (contexte PDP) dans le système de communication radio, l'unité de gestion comportant une temporisation qui est démarrée lorsqu'une période de calcul commence et, seulement après l'expiration de la temporisation, la présence de trafic de données étant de nouveau surveillée.

17. Noeud de passerelle selon la revendication 16, **caractérisé en ce que** ledit noeud comporte une unité servant à l'interprétation des informations de facturation reçues et, facultativement, une unité d'émission servant à transmettre des résultats de l'unité de gestion.

18. Noeud de passerelle selon l'une quelconque des revendications 16 ou 17, **caractérisé en ce que** l'unité de gestion est conçue pour la gestion de jetons de décompte.

19. Noeud de passerelle selon l'une quelconque des revendications 16 à 18, **caractérisé en ce que** ledit noeud est conçu pour exécuter le procédé selon l'une quelconque des revendications 1 à 15.

20. Serveur de facturation pour un système de communication radio, **caractérisé en ce que** ledit serveur comporte une unité servant à l'émission d'informations de facturation sous forme des longueurs de la période de calcul (intervalle PM/CTP).

21. Serveur de facturation selon la revendication 20, **caractérisé en ce que** ledit serveur comporte une unité servant à la réception d'informations de facturation et/ou une unité servant à l'interprétation des informations de facturation reçues.

22. Serveur de facturation selon l'une quelconque des revendications 20 ou 21, **caractérisé en ce que** ledit serveur est conçu pour effectuer le procédé selon l'une quelconque des revendications 1 à 15.

23. Système de facturation de trafic de données dans un système de communication radio, qui comporte au moins terminal mobile (UE) et au moins un réseau de services (IMS) ayant au moins noeud de passerelle (GGSN), **caractérisé en ce que** le noeud de passerelle (GGSN) comporte une unité de gestion servant à la gestion de périodes de calcul pour la facturation de trafic de données dans une liaison existante (contexte PDP) au noeud de passerelle (GGSN), l'unité de gestion comportant une temporisation qui est démarrée lorsqu'une période de calcul commence et, seulement après l'expiration de la temporisation, la présence de trafic de données étant de nouveau surveillée.

24. Système selon la revendication 23, **caractérisé en ce que** le noeud de passerelle (GGSN) est relié à un serveur de facturation (AAA) par l'intermédiaire d'une interface (DCCA) qui est conçue pour transmettre des grandeurs d'entrée pour l'unité de gestion dans le noeud de passerelle (GGSN).

25. Système selon l'une quelconque des revendications 23 ou 24, **caractérisé en ce que** le noeud de passerelle (GGSN) est relié à un serveur de facturation (AAA) par l'intermédiaire d'une interface (DCCA) qui est conçue pour transmettre des résultats de l'unité de gestion dans le noeud de passerelle (GGSN).

26. Système selon l'une quelconque des revendications 23 à 25, **caractérisé en ce que** l'interface (DCCA) est conçue pour transmettre des jetons entre le noeud de passerelle (GGSN) et le serveur de facturation (AAA).

27. Système selon la revendication 24 à 26, **caractérisé en ce que** l'interface est conçue pour exécuter des sessions selon le protocole Diameter.

28. Système selon l'une quelconque des revendications 23 à 27, **caractérisé en ce que** ledit système comporte un noeud de passerelle selon l'une quelconque des revendications 16 à 19.

29. Système selon l'une quelconque des revendications 23 à 28, **caractérisé en ce que** ledit système comporte un serveur de facturation selon l'une quelconque des revendications 20 à 22.

30. Système selon l'une quelconque des revendications 23 à 29, **caractérisé en ce que** ledit système est configuré pour l'exécution du procédé selon l'une quelconque des revendications 1 à 15.
